# EUROPÄISCHE PATENTSCHRIFT

(11) **EP 4 245 920 B1**
(45) Veröffentlichungstag und Bekanntmachung des Hinweises auf die Patenterteilung: **10.04.2024**
(21) Anmeldenummer: 23157500.2
(22) Anmeldetag: 20.02.2023
(51) Int. Cl.: E01C 19/27, E02D 3/026

(54) **RADBAUGRUPPE FÜR EINEN BODENVERDICHTER**
WHEEL ASSEMBLY FOR A SOIL COMPACTOR
ENSEMBLE ROUE POUR UN COMPACTEUR DE SOL

(30) Priorität: 18.03.2022 DE 102022106321
(43) Veröffentlichungstag der Anmeldung: 20.09.2023
(73) Patentinhaber: Hamm AG, 95643 Tirschenreuth (DE)
(72) Erfinder: Würner, Christian, Tirschenreuth (DE); Krockauer, Rainer, Plößberg (DE); Mahler, Gerhard, Windischeschenbach (DE)
(74) Vertreter: Ruttensperger Lachnit Trossin Gomoll

(56) Entgegenhaltungen:
- DE-B- 1 265 184
- JP-A- H08 132 809

## Beschreibung

Die vorliegende Erfindung betrifft eine Radbaugruppe für einen Bodenverdichter.

Als sogenannte Gummiradwalzen ausgebildete Bodenverdichter umfassen an einem Verdichterrahmen zumindest eine Gruppe von im Allgemeinen als Gummiräder ausgebildeten Rädern, die im Verdichtungsbetrieb um eine Betriebs-Raddrehachse drehbar sind und dabei durch statische Belastung zu verdichtendes Material, wie zum Beispiel Asphalt, verdichten. Um eine möglichst vollflächige Verdichtung des zu verdichtenden Materials zu erreichen, weisen die Räder einer derartigen Radbaugruppe in Richtung der Betriebs-Raddrehachse einen vergleichsweise geringen Abstand auf, der im Allgemeinen kleiner ist, als die Breite eines derartigen Rads in Richtung der Betriebs-Raddrehachse.

Die DE-B-1265184 offenbart eine Radbaugruppe für einen Bodenverdichter mit einer Mehrzahl von Rädern sowie einem verschwenkbaren Hilfsrad.

Es ist die Aufgabe der vorliegenden Erfindung, eine Radbaugruppe für einen Bodenverdichter vorzusehen, welche zur Durchführung von Montage- bzw. Reparaturarbeiten einen leichten Zugriff auch auf in Richtung einer Betriebs-Raddrehachse in einem mittleren Bereich der Radbaugruppe positionierte Räder ermöglicht.

Erfindungsgemäß wird diese Aufgabe gelöst durch eine Radbaugruppe für einen Bodenverdichter, umfassend eine Mehrzahl von an einem Rad-Hauptträger in Richtung einer Betriebs-Raddrehachse aufeinander folgend getragenen Rädern, wobei wenigstens ein in Richtung der Betriebs-Raddrehachse zwischen einem ersten Rad und einem zweiten Rad angeordnetes drittes Rad ein Montage-Hilfsrad bildet und vermittels eines Hilfsradträgers an dem Rad-Hauptträger getragen ist, wobei der Hilfsradträger in einem Hilfsrad-Betriebszustand mit dem Rad-Hauptträger fest gekoppelt ist und in einem Hilfsrad-Montagezustand bezüglich des Rad-Hauptträgers um eine Schwenkachse verschwenkbar und in Richtung der Schwenkachse verschiebbar ist.

Insbesondere dann, wenn an dem wenigstens einen Montage-Hilfsrad selbst oder einem in Richtung der Betriebs-Raddrehachse auf dieses folgenden Rad, also dem ersten Rad oder dem zweiten Rad, Reparaturen durchzuführen sind oder ein derartiges Rad gewechselt werden muss, kann durch Verschwenken bzw. Verschieben des Hilfsradträgers dieser im Hilfsrad-Montagezustand in eine Montagestellung gebracht werden, in welcher das wenigstens eine am Hilfsradträger getragene Montage-Hilfsrad aus dem Bereich der anderen Räder der Radbaugruppe heraus verschwenkt ist und somit leicht Zugriff auf das wenigstens eine Montage-Hilfsrad bzw. das erste und das zweite Rad besteht.

Für einen einfach zu realisierenden und zu bedienenden Aufbau wird vorgeschlagen, dass die Schwenkachse im Wesentlichen parallel zur Betriebs-Raddrehachse orientiert ist.

Um zu Durchführung eines Verdichtungsbetriebs eine feste, definierte Positionierung auch des Hilfsradträgers zu gewährleisten, wird vorgeschlagen, dass der Hilfsradträger in einem Fest-Kopplungsbereich mit dem Rad-Hauptträger im Hilfsrad-Betriebszustand vermittels einer Mehrzahl von Kopplungsorganen, vorzugsweise Schraubbolzen, fest gekoppelt ist.

Hierzu kann beispielsweise der Fest-Kopplungsbereich an dem Hilfsradträger wenigstens eine erste Kopplungsplatte und an dem Rad-Hauptträger wenigstens eine durch die Kopplungsorgane mit der wenigstens einen ersten Kopplungsplatte fest koppelbare zweite Kopplungsplatte umfassen.

Um im Hilfsrad-Montagezustand den Hilfsradträger in einfacher Weise in die Montagestellung bringen zu können, wird vorgeschlagen, dass der Hilfsradträger in einem Schwenk-Kopplungsbereich mit dem Rad-Hauptträger um die Schwenkachse verschwenkbar und in Richtung der Schwenkachse verschiebbar gekoppelt ist.

Hierzu kann der Schwenk-Kopplungsbereich an dem Rad-Hauptträger einen in Richtung der Schwenkachse langgestreckten Schwenk/Schiebe-Schaft und an dem Hilfsradträger wenigstens eine auf dem Schwenk/Schiebe-Schaft um die Schwenkachse schwenkbar und in Richtung der Schwenkachse verschiebbar geführte Schwenk/Schiebe-Hülse umfassen.

Für eine stabile und auch Verschiebeendpositionen definierende Ausgestaltung kann der Schwenk/Schiebe-Schaft in jedem seiner axialen Endbereiche vermittels eines Schaftträgerelements an dem Rad-Hauptträger getragen sein.

Um einerseits die feste, stabile Positionierung im Hilfsrad-Betriebszustand gewährleisten zu können, andererseits jedoch auch die Verschwenkbarkeit und Verschiebbarkeit im Hilfsrad-Montagezustand erreichen zu können, wird vorgeschlagen, dass die Schwenkachse bezüglich der Betriebs-Raddrehachse quer zu einer Vertikalrichtung versetzt ist.

Da der vorangehend angesprochene Versatz im Allgemeinen dazu führt, dass beim Verschwenken des Hilfsradträgers in die Montagestellung das wenigstens eine daran getragene Montage-Hilfsrad bezüglich der anderen Räder der Radbaugruppe in vertikaler Richtung zunächst abgesenkt wird, wird zum Vermeiden der Notwendigkeit, zunächst den gesamten Bodenverdichter anheben zu müssen, vorgeschlagen, dass der Hilfsradträger zur Veränderung eines Abstandes zwischen der Schwenkachse und einer Hilfsraddrehachse des wenigstens einen an dem Hilfsradträger getragenen Montage-Hilfsrads längenveränderbar ist.

Hierzu kann der Hilfsradträger ein an dem Rad-Hauptträger um die Schwenkachse verschwenkbar und in Richtung der Schwenkachse verschiebbar getragenes erstes Hilfsradträgerelement und ein an dem ersten Hilfsradträgerelement im Wesentlichen in Richtung einer Hilfsradträger-Längsachse bezüglich des ersten Hilfsradträgerelements verschiebbares zweites Hilfsradträgerelement umfassen.

Um im Verdichtungsbetrieb eine stabile Positionierung des wenigstens einen am Hilfsradträger getragenen Montage-Hilfsrads zu gewährleisten, kann das zweite Hilfsradträgerelement bezüglich des ersten Hilfsradträgerelements in einer Betriebs-Verschiebeposition arretierbar sein. Ferner kann eine Bewegung der beiden Hilfsradträgerelemente bezüglich einander dadurch erreicht werden, dass das zweite Hilfsradträgerelement bezüglich des ersten Hilfsradträgerelements vermittels eines Stellorgans, beispielsweise Kolben/Zylinder-Baugruppe, verschiebbar ist.

Bei der erfindungsgemäß aufgebauten Radbaugruppe kann ein erstes Radpaar vermittels eines ersten Radpaarträgers an dem Rad-Hauptträger getragen sein, und ein zweites Radpaar kann vermittels eines zweiten Radpaarträgers an dem Radhauptträger getragen sein. Ein Rad des ersten Radpaares kann dabei das erste Rad bilden, und ein Rad des zweiten Radpaares kann das zweite Rad bilden. Der Hilfsradträger mit dem wenigstens einen daran getragenen Montage-Hilfsrad ist bei derartiger Ausgestaltung also zwischen den beiden Radpaaren angeordnet. Vorteilhafterweise sind bei einer derartigen Ausgestaltung der erste Radpaarträger und der zweite Radpaarträger an dem Rad-Hauptträger im Wesentlichen starr, also positionsunveränderlich, festgelegt.

Die Erfindung betrifft ferner einen Bodenverdichter mit wenigstens einer erfindungsgemäß aufgebauten Radbaugruppe.

An einem Verdichterrahmen können in einer Bodenverdichter-Längsrichtung aufeinander folgend zwei Radbaugruppen angeordnet sein, wovon zumindest eine erfindungsgemäß aus gestaltet ist. Die Räder einer ersten Radbaugruppe der beiden Radbaugruppen sind vorteilhafterweise bezüglich der Räder einer zweiten Radbaugruppe der beiden Radbaugruppen in einer zur Bodenverdichter-Längsrichtung im Wesentlichen orthogonalen Bodenverdichter-Querrichtung versetzt.

Die vorliegende Erfindung wird nachfolgend mit Bezug auf die beiliegenden Figuren detailliert beschrieben. Es zeigt:
- Fig. 1: eine prinzipartige Darstellung eines mit einer Radbaugruppe mit einer Mehrzahl von Rädern aufgebauten Bodenverdichters;
- Fig. 2: eine Radbaugruppe für den Bodenverdichter der Fig. 1;
- Fig. 3: eine perspektivische Ansicht der Radbaugruppe;
- Fig. 4: eine Axialansicht der Radbaugruppe;
- Fig. 5: eine der Fig. 2 entsprechende Ansicht der Radbaugruppe mit entferntem Montage-Hilfsrad;
- Fig. 6: eine der Fig. 5 entsprechende Darstellung mit in Richtung einer Schwenkachse verschobenem Hilfsradträger;
- Fig. 7: eine alternative Ausgestaltungsart eines Hilfsradträgers für eine Radbaugruppe.

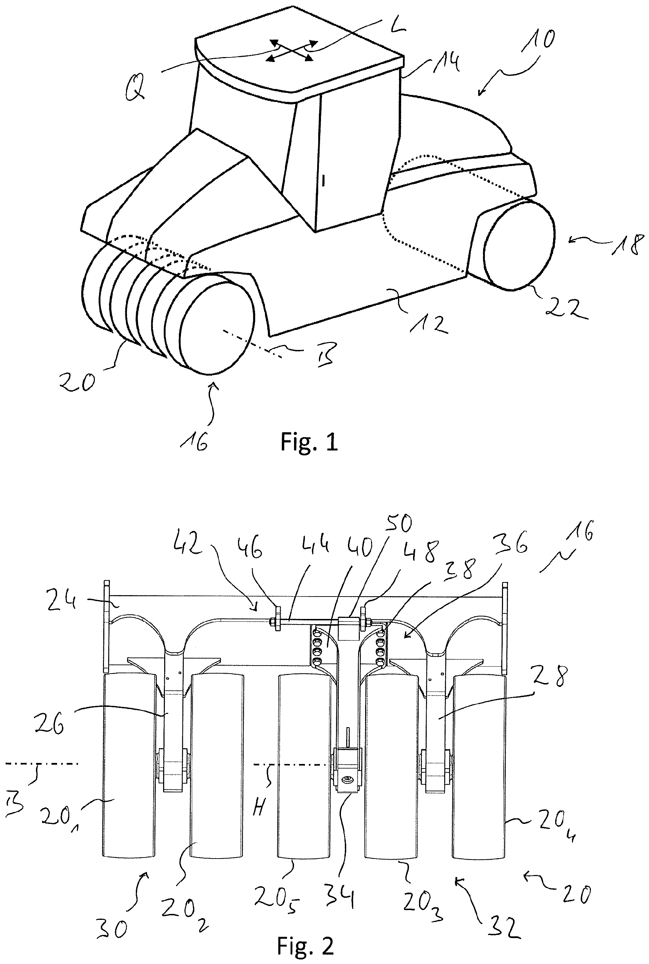

In Fig. 1 ist ein nach Art einer Gummiradwalze aufgebauter Bodenverdichter allgemein mit 10 bezeichnet. Der Bodenverdichter 10 umfasst an einem Verdichterrahmen 12 einen Bedienstand 14, in welchem eine Bedienperson zum Bedienen des Bodenverdichters 10 Platz nehmen kann. An dem Verdichterrahmen 12 sind in einer Bodenverdichter-Längsrichtung L in Abstand zueinander eine Radbaugruppe 16 und eine Verdichterwalze 18 angeordnet. Die Radbaugruppe 16 umfasst eine Mehrzahl von in einer Bodenverdichter-Querrichtung Q bzw. in Richtung einer Betriebs-Raddrehachse B aufeinander folgenden und im Allgemeinen als Gummiräder ausgebildeten Rädern 20. Die Verdichterwalze 18 ist mit einem in der Bodenverdichter-Querrichtung Q beispielsweise durchgehenden Walzenmantel 22 ausgebildet.

Es ist darauf hinzuweisen, dass der Bodenverdichter 10 auch mit zwei derartigen Radbaugruppen 16 aufgebaut sein könnte, wobei dann die Räder 20 der einzelnen Radbaugruppen 16 in der Bodenverdichter-Querrichtung Q zueinander versetzt angeordnet sein können, so dass beim Überfahren des zu verdichtenden Bodens dieser über die gesamte Breite des Bodenverdichters 10 erfasst und verdichtet werden kann.

Zum Lenken des Bodenverdichters 10 ist es möglich, die Radbaugruppe 16 oder/und die Verdichterwalze 18 am Maschinenrahmen 12 um eine jeweilige Schwenkachse schwenkbar zu tragen, so dass beispielsweise sowohl durch Verschwenken der Radbaugruppe 16 bezüglich des Verdichterrahmens 12 um eine dieser zugeordnete Lenkachse, als auch durch Verschwenken der Verdichterwalze 22 oder ggf. der weiteren Radbaugruppe 16 bezüglich des Bodenverdichterrahmens 12 um eine dieser zugeordnete Lenkachse der Bodenverdichter 10 gelenkt werden kann. Bei einer alternativen Ausgestaltungsart könnte der Bodenverdichter 10 bzw. dessen Verdichterrahmen 12 mit einem Vorderwagen und einem Hinterwagen aufgebaut sein, welche im Bereich eines Knickgelenks miteinander verschwenkbar verbunden sind und durch Verschwenken bezüglich einander eine Lenkbewegung des Bodenverdichters 10 auslösen. Bei derartiger Ausgestaltung können am Vorderwagen bzw. Hinterwagen die Radbaugruppe 16 und die Verdichterwalze 18 bzw. ggf. die weitere Radbaugruppe 16 im Wesentlichen starr, also nicht um eine Lenkachse schwenkbar, getragen sein.

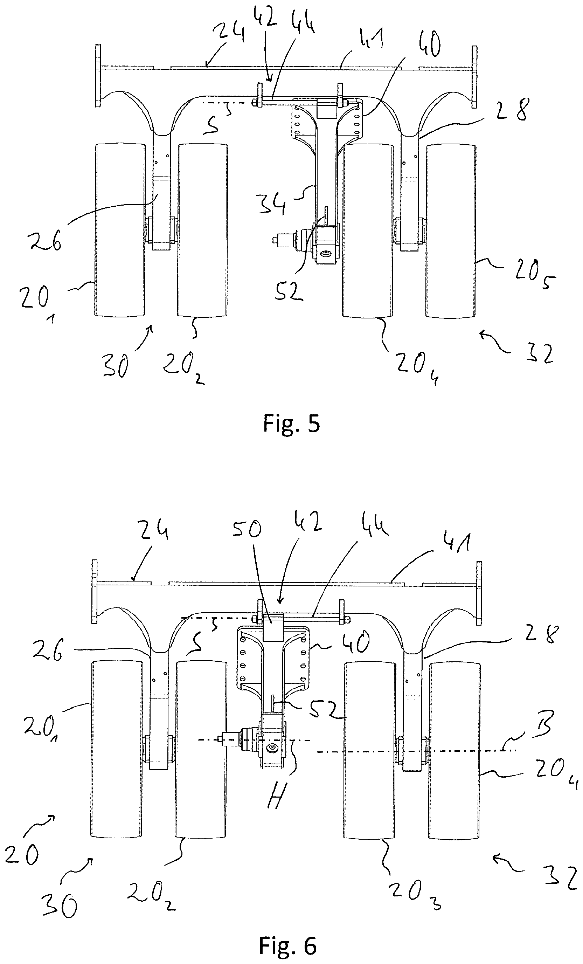

Die Fig. 2 bis 6 zeigen eine derartige Radbaugruppe 16 für den Bodenverdichter 10. Die Radbaugruppe 16 umfasst einen Rad-Hauptträger 24, welcher, je nach Ausgestaltungsart des Bodenverdichters 10, am Verdichterrahmen 12 starr oder um eine Lenkachse verschwenkbar getragen sein kann. Am Verdichter-Hauptrahmen 24 sind ein erster Radpaarträger 26 und ein zweiter Radpaarträger 28 im Wesentlichen starr und in Richtung der Betriebs-Raddrehachse B in Abstand zueinander angeordnet. An jedem der Radpaarträger 26, 28 ist jeweils ein Radpaar 30, 32 mit zwei Rädern 20₁, 20₂, 20₃, 20₄ um die Betriebs-Raddrehachse B drehbar getragen. Zwischen dem Rad 20₂ des ersten Radpaares 30, welches im Sinne der vorliegenden Erfindung ein erstes Rad bildet, und dem Rad 20s des zweiten Radpaares, welches im Sinne der vorliegenden Erfindung ein zweites Rad bildet, ist am Rad-Hauptträger 24 ein Hilfsradträger 34 getragen. Am Hilfsradträger 34 ist ein im Sinne der vorliegenden Erfindung ein drittes Rad bildendes Montage-Hilfsrad 20₅ um eine Hilfsraddrehachse H drehbar getragen. Im Verdichtungsbetreib des Bodenverdichters 10 ist der Hilfsradträger 34 in einem Hilfsrad-Betriebszustand, in welchem die Hilfsraddrehachse H der Betriebs-Raddrehachse B entspricht, so dass alle Räder 20 der Radbaugruppe 16 um die gleiche Drehachse rotieren.

Der Hilfsradträger 34 ist in einem allgemein mit 36 bezeichneten Fest-Kopplungsbereich mit dem Rad-Hauptträger 24 fest koppelbar. Dazu weist der Hilfsradträger 34 eine erste Kopplungsplatte 40 auf, welche vermittels einer Mehrzahl von beispielsweise als Schraubbolzen ausgebildeten Befestigungsorganen 38 mit einer zweiten Kopplungsplatte 41 des Rad-Hauptträgers 24 fest verbunden bzw. gekoppelt werden kann. Ist dieser Zustand der festen Kopplung hergestellt, ist der Hilfsradträger 34 in einem Hilfsrad-Betriebszustand, in welchem zur Durchführung eines Verdichtungsbetriebs bzw. generell zum Bewegen des Bodenverdichters 10 über einen Boden alle Räder 20 der Radbaugruppe 16 um die gleiche Drehachse, nämlich die Betriebs-Raddrehachse B, rotieren.

Vermittels eines Schwenk-Kopplungsbereichs 42 ist der Hilfsradträger 34 mit dem Rad-Hauptträger 24 derart gekoppelt, dass er in einem Hilfsrad-Montagezustand, also bei nicht hergestellter Kopplung im Fest-Kopplungsbereich 36, um eine Schwenkachse S bezüglich des Rad-Hauptträgers 24 verschwenkbar und in Richtung der Schwenkachse S verschiebbar ist. Hierzu weist der Schwenk-Kopplungsbereich 42 einen Schwenk/Schiebe-Schaft 44 auf, der in seinen beiden axialen Endbereichen jeweils vermittels eines Schaftträgerelements 46, 48 am Rad-Hauptträger 24 fest getragen ist. Am Hilfsradträger 34 ist eine Schwenk/SchiebeHülse 50 vorgesehen, welche auf dem Schwenk/Schiebe-Schaft 44 in Richtung der Schwenkachse S verschiebbar und um die Schwenkachse S drehbar ist.

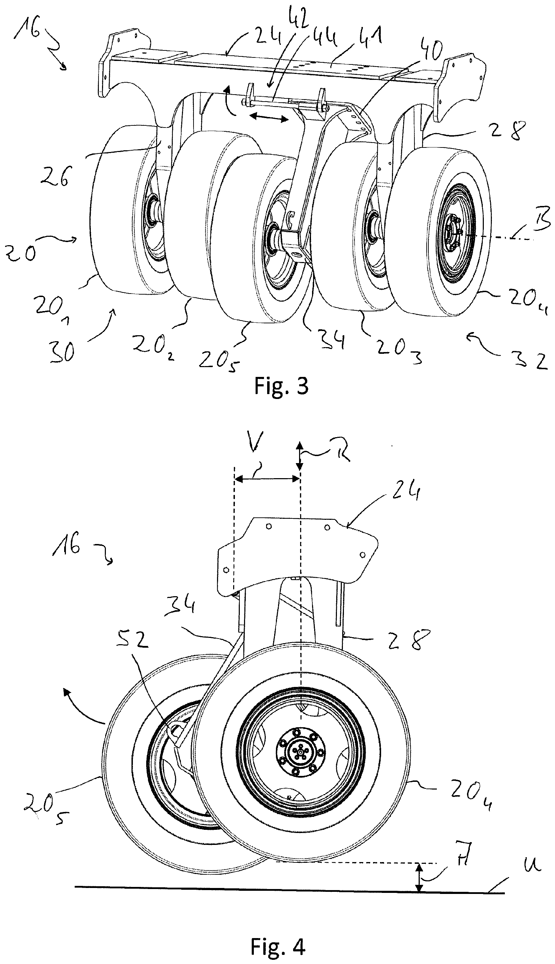

Zur Durchführung von Wartungsarbeiten oder Reparaturarbeiten an den Rädern 20₂ bzw. 20s oder am Montage-Hilfsrad 20s oder zum Wechseln von zumindest einem dieser Räder kann bei in dem Hilfsrad-Betriebszustand sich befindendem Hilfsradträger 34 durch Lösen der Befestigungsorgane 38 die feste Ankopplung des Hilfsradträgers 34 an den Rad-Hauptträger 24 aufgehoben werden. Der Hilfsradträger ist dann in seinem Hilfsrad-Montagezustand, in welchem dieser lediglich vermittels des Schwenk-Kopplungsbereichs 42 mit dem Rad-Hauptträger 24 gekoppelt ist. Durch Verschwenken des Hilfsradträgers 34 um die Schwenkachse S oder/und Verschieben des Hilfsradträgers 34 entlang der Schwenkachse S kann dieser, wie in den Fig. 3 und 4 angedeutet, in Richtung zu einer Montagestellung verschwenkt bzw. verschoben werden, in welcher das Montage-Hilfsrad 20s aus seiner Ausrichtung mit den anderen Rädern 20₁, 20₂, 20₃, 20₄ der Radbaugruppe 16 heraus bewegt ist, so dass die Hilfsraddrehachse H nicht mehr mit der Betriebs-Raddrehachse B übereinstimmt. Da, wie in Fig. 4 angedeutet, die Schwenkachse S bezüglich der Betriebs-Raddrehachse B quer zu einer Vertikalrichtung R um einen Versatz V versetzt ist, führt eine Verschwenkung des Hilfsradträgers 34 in Richtung zur Montagestellung grundsätzlich dazu, dass zunächst das Hilfsrad 20s bezüglich der anderen Räder 20₁, 20₂, 20₃, 20₄ der Radbaugruppe 16 abgesenkt wird. Um dies zu ermöglichen, muss zur Durchführung derartiger Arbeiten zunächst der Bodenverdichter 10 zumindest im Bereich der Radbaugruppe 16 angehoben werden, so dass zwischen den Rädern 20 der Radbaugruppe 16 und dem Boden U, auf dem der Bodenverdichter 10 sich befindet, ein Abstand A entsteht, welcher das Verschwenken und dabei zunächst das Absenken des Montage-Hilfsrads 20s ermöglicht.

Der Hilfsradträger 34 kann dann zusammen mit dem Montage-Hilfsrad 20s vollständig aus dem Bereich der anderen Räder 20₁, 20₂, 20₃, 20₄ der Radbaugruppe 16 heraus verschwenkt werden. Soll beispielsweise das zweite Rad 20s gewechselt werden, kann, nachdem das Montage-Hilfsrad 20s vollständig aus dem Bereich der anderen Räder heraus verschwenkt wurde, der Hilfsradträger 34 in Richtung der Schwenkachse S auf das erste Radpaar 30 zu verschoben werden, bis das Montage-Hilfsrad 20s das erste Rad 20₂ in Richtung der Betriebs-Raddrehachse B zumindest teilweise überlappt. Das Montage-Hilfsrad 20s kann dann am Außenumfang des ersten Rads 20₂ abgestützt werden. Es sind keine weiteren Maßnahmen erforderlich, um den Hilfsradträger 34 bzw. das Montage-Hilfsrad 20s in dieser Montagestellung zu halten. Alternativ oder zur erhöhten Sicherheit kann an einer Öse 52 des Hilfsradträgers 34 eine Kette oder dergleichen eingehakt werden, vermittels welcher der Hilfsradträger 34 in der Montagestellung gehalten wird.

Nach Durchführung der Wartungs- bzw. Montagearbeiten bzw. eines Radwechsels kann durch Zurückverschieben bzw. Zurückverschwenken der Hilfsradträger 34 wieder in eine Stellung gebracht werden, in welcher dieser vermittels des Fest-Kopplungsbereichs 36 und der Befestigungsorgane 38 desselben fest mit dem Rad-Hauptträger 24 gekoppelt werden kann, so dass die Hilfsraddrehachse H wieder der Betriebs-Raddrehachse B entspricht und alle Räder 20 der Radbaugruppe 16 wieder um die gemeinsame Betriebs-Raddrehachse B rotieren können.

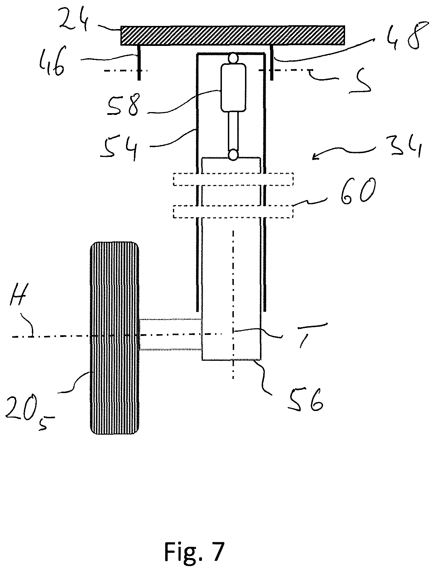

Um zum Bewegen des Hilfsradträgers 34 bzw. des daran getragenen Montage-Hilfsrads 20s in die Montagestellung ein Anheben des Bodenverdichters 10 im Bereich der Radbaugruppe 16 vermeiden zu können, kann, wie in Fig. 7 dargestellt, der Hilfsradträger 34 längenveränderbar ausgebildet sein. Hierzu kann der Hilfsradträger 34 insbesondere teleskopierbar ausgebildet sein und ein erstes Hilfsradträgerelement 54 aufweisen, welches an dem Rad-Hauptträger 24 um die Schwenkachse S schwenkbar getragen ist. An bzw. in dem ersten Hilfsradträgerelement 24 kann ein in Richtung einer Hilfsradträger-Längsachse T verschiebbares zweites Hilfsradträgerelement 56 vorgesehen sein. Vermittels eines Stellorgans 58, beispielsweise einer mit Druckfluid beaufschlagbaren Kolben/Zylinder-Baugruppe, können die beiden Hilfsradträgerelemente 54, 56 in Richtung der Hilfsradträger-Längsachse T bezüglich einander verschoben werden, um dadurch die Länge des Hilfsradträgers 34 und somit den Abstand zwischen der Schwenkachse S und der Hilfsraddrehachse H zu verändern.

Um in dem Hilfsrad-Betriebszustand eine stabile, definierte Positionierung der beiden Hilfsradträgerelemente 54, 56 zu gewährleisten, können diese durch ein oder mehrere Kopplungsorgane 60 fest miteinander gekoppelt werden. Diese Kopplungsorgane 60 können beispielsweise als die beiden Hilfsträgerelemente 54, 56 durchsetzende Kopplungsbolzen ausgebildet sein. Zur Veränderung der Länge des Hilfsradträgers 34 können diese Kopplungsorgane 60 entfernt werden, woraufhin durch Aktivierung des Stellorgans 58 das zweite Hilfsradträgerelement 56 auf das erste Hilfsradträgerelement 54 zu bzw. in dieses hinein gezogen werden kann. Dies führt dazu, dass das Montage-Hilfsrad 20s vom Boden U abhebt, während die anderen Räder 20₁, 20₂, 20₃, 20₄ der Radbaugruppe 16 auf dem Boden U stehen bleiben. Nachfolgend kann, so wie vorangehend bereits dargestellt, der Hilfsradträger 34 und mit diesem das Montage-Hilfsrad 20s durch Verschwenken um die Schwenkachse S bzw. Verschieben in Richtung der Schwenkachse S in seine Montagestellung gebracht werden.

Abschließend ist darauf hinzuweisen, dass, sofern im Kontext der vorliegenden Erfindung die Betriebs-Raddrehachse B angesprochen ist, dies grundsätzlich diejenige Raddrehachse ist, um welche die Räder einer Radbaugruppe bei Geradeausfahrt eines Bodenverdichters, also im ungelenken Zustand, rotieren. Bei der vorangehend beschriebenen und in den Figuren dargestellten Ausgestaltungsform einer Radbaugruppe, bei welcher beispielsweise der Rad-Hauptträger 24 zum Lenken des Bodenverdichters an dem Verdichterrahmen 28 desselben um eine Lenkachse schwenkbar getragen ist, rotieren auch im Lenkzustand alle Räder einer derartigen Radbaugruppe um die gemeinsame Betriebs-Raddrehachse B.

Grundsätzlich könnte bei der beispielsweise in Fig. 2 dargestellten Radbaugruppe auch vorgesehen sein, dass die am Radpaarträger 26 getragenen Räder 20₁, 20₂ des ersten Radpaares 30 am Rad-Hauptträger 24 um eine diesen zugeordnete Lenkachse schwenkbar getragen sind und die Räder 20₃, 20₄ des zweiten Radpaares 32 mit ihrem Radpaarträger 28 zusammen mit Hilfsradträger 34 und dem daran getragenen Montage-Hilfsrad 20s über einen Hilfsrahmen am Rad-Hauptträger 24 um eine separate Lenkachse schwenkbar getragen sind. Bei diesen beiden Untergruppen von Rädern rotieren bei Geradeausfahrt wieder alle Räder um die gemeinsame Betriebs-Raddrehachse B. Bei Durchführung einer Lenkbewegung Verschwenken jedoch die beiden Untergruppen um verschiedene Lenkachsen, so dass im Lenkzustand die Betriebs-Raddrehachsen der beiden Untergruppen sich unterscheiden.

## Patentansprüche

1. Radbaugruppe für einen Bodenverdichter, umfassend eine Mehrzahl von an einem Rad-Hauptträger (24) in Richtung einer Betriebs-Raddrehachse (B) aufeinander folgend getragenen Rädern (20), wobei wenigstens ein in Richtung der Betriebs-Raddrehachse (B) zwischen einem ersten Rad und einem zweiten Rad angeordnetes drittes Rad ein Montage-Hilfsrad (20s) bildet und vermittels eines Hilfsradträgers (34) an dem Rad-Hauptträger (24) getragen ist, wobei der Hilfsradträger (34) in einem Hilfsrad-Betriebszustand mit dem Rad-Hauptträger (24) fest gekoppelt ist und in einem Hilfsrad-Montagezustand bezüglich des Rad-Hauptträgers (24) um eine Schwenkachse (S) verschwenkbar und in Richtung der Schwenkachse (S) verschiebbar ist.

2. Radbaugruppe nach Anspruch 1,
**dadurch gekennzeichnet, dass** die Schwenkachse (S) im Wesentlichen parallel zur Betriebs-Raddrehachse (B) orientiert ist.

3. Radbaugruppe nach Anspruch 1 oder 2,
**dadurch gekennzeichnet, dass** der Hilfsradträger (34) in einem Fest-Kopplungsbereich (36) mit dem Rad-Hauptträger (24) im Hilfsrad-Betriebszustand vermittels einer Mehrzahl von Kopplungsorganen (38), vorzugsweise Schraubbolzen, fest gekoppelt ist.

4. Radbaugruppe nach Anspruch 3,
**dadurch gekennzeichnet, dass** der Fest-Kopplungsbereich (36) an dem Hilfsradträger (34) wenigstens eine erste Kopplungsplatte (40) und an dem Rad-Hauptträger (24) wenigstens eine durch die Kopplungsorgane (38) mit der wenigstens einen ersten Kopplungsplatte (40) fest koppelbare zweite Kopplungsplatte (41) umfasst.

5. Radbaugruppe nach einem der Ansprüche 1-4,
**dadurch gekennzeichnet, dass** der Hilfsradträger (34) in einem Schwenk-Kopplungsbereich (42) mit dem Rad-Hauptträger (34) um die Schwenkachse (S) verschwenkbar und in Richtung der Schwenkachse (S) verschiebbar gekoppelt ist.

6. Radbaugruppe nach Anspruch 5,
**dadurch gekennzeichnet, dass** der Schwenk-Kopplungsbereich (42) an dem Rad-Hauptträger (24) einen in Richtung der Schwenkachse (S) langgestreckten Schwenk/Schiebe-Schaft (44) und an dem Hilfsradträger (34) wenigstens eine auf dem Schwenk/Schiebe-Schaft (44) um die Schwenkachse (S) schwenkbar und in Richtung der Schwenkachse (S) verschiebbar geführte Schwenk/Schiebe-Hülse (50) umfasst.

7. Radbaugruppe nach Anspruch 6,
**dadurch gekennzeichnet, dass** der Schwenk/Schiebe-Schaft (44) in jedem seiner axialen Endbereiche vermittels eines Schaftträgerelements (46, 48) an dem Rad-Hauptträger (24) getragen ist.

8. Radbaugruppe nach einem der Ansprüche 1-7,
**dadurch gekennzeichnet, dass** die Schwenkachse (S) bezüglich der Betriebs-Raddrehachse (B) quer zu einer Vertikalrichtung (R) versetzt ist.

9. Radbaugruppe nach einem der Ansprüche 1-8,
**dadurch gekennzeichnet, dass** der Hilfsradträger (34) zur Veränderung eines Abstandes zwischen der Schwenkachse (S) und einer Hilfsraddrehachse (H) des wenigstens einen an dem Hilfsradträger (34) getragenen Montage-Hilfsrads (20s) längenveränderbar ist.

10. Radbaugruppe nach Anspruch 9,
**dadurch gekennzeichnet, dass** der Hilfsradträger (34) ein an dem Rad-Hauptträger (24) um die Schwenkachse (S) verschwenkbar und in Richtung der Schwenkachse (S) verschiebbar getragenes erstes Hilfsradträgerelement (54) und ein an dem ersten Hilfsradträgerelement (54) im Wesentlichen in Richtung einer Hilfsradträger-Längsachse (T) bezüglich des ersten Hilfsradträgerelements (54) verschiebbares zweites Hilfsradträgerelement (54) umfasst.

11. Radbaugruppe nach Anspruch 10,
**dadurch gekennzeichnet, dass** das zweite Hilfsradträgerelement (56) bezüglich des ersten Hilfsradträgerelements (54) in einer Betriebs-Verschiebeposition arretierbar ist, oder/und dass das zweite Hilfsradträgerelement (56) bezüglich des ersten Hilfsradträgerelements (54) vermittels eines Stellorgans (58) verschiebbar ist.

12. Radbaugruppe nach einem der Ansprüche 1-11,
**dadurch gekennzeichnet, dass** ein erstes Radpaar (30) vermittels eines ersten Radpaarträgers (26) an dem Rad-Hauptträger (24) getragen ist, dass ein zweites Radpaar (32) vermittels eines zweiten Radpaarträgers (28) an dem Rad-Hauptträger (24) getragen ist, und dass ein Rad (20₂) des ersten Radpaares (30) das erste Rad bildet und ein Rad (20s) des zweiten Radpaares (32) das zweite Rad bildet.

13. Bodenverdichter, umfassend wenigstens eine Radbaugruppe (16) nach einem der vorangehenden Ansprüche.

14. Bodenverdichter nach Anspruch 13,
**dadurch gekennzeichnet, dass** an einem Verdichterrahmen (12) in einer Bodenverdichter-Längsrichtung (L) aufeinander folgend zwei Radbaugruppen (16) angeordnet sind, wobei die Räder (20) einer ersten Radbaugruppe der beiden Radbaugruppen (16) bezüglich der Räder (20) einer zweiten Radbaugruppe der beiden Radbaugruppen (16) in einer zur Bodenverdichter-Längsrichtung (L) im Wesentlichen orthogonalen Bodenverdichter-Querrichtung (Q) versetzt sind.

## Claims

1. A wheel assembly for a soil compactor, comprising a plurality of wheels (20) supported in succession on a main wheel carrier (24) in the direction of an operating wheel axis of rotation (B), wherein at least one third wheel, which is arranged between a first wheel and a second wheel in the direction of the operating wheel axis of rotation (B), forms an auxiliary assembly wheel (20s) and is supported on the main wheel carrier (24) by means of an auxiliary wheel carrier (34), wherein the auxiliary wheel carrier (34) is firmly coupled to the main wheel carrier (24) in an auxiliary wheel operating state and is pivotable about a pivot axis (S) and displaceable in the direction of the pivot axis (S) in relation to the main wheel carrier (24) in an auxiliary wheel assembly state.

2. The wheel assembly according to claim 1,
**characterized in that** the pivot axis (S) is oriented substantially parallel to the operating wheel axis of rotation (B).

3. The wheel assembly according to claim 1 or 2,
**characterized in that** the auxiliary wheel carrier (34) is firmly coupled in a fixed coupling region (36) to the main wheel carrier (24) in the auxiliary wheel operating state by means of a plurality of coupling elements (38), preferably bolts.

4. The wheel assembly according to claim 3,
**characterized in that** the fixed coupling region (36) comprises at least one first coupling plate (40) on the auxiliary wheel carrier (34) and at least one second coupling plate (41), which can be firmly coupled to the at least one first coupling plate (40) by the coupling elements (38), on the main wheel carrier (24).

5. The wheel assembly according to any one of claims 1-4,
**characterized in that** the auxiliary wheel carrier (34) is coupled to the main wheel carrier (34) in a pivot coupling region (42) so that it can pivot about the pivot axis (S) and be displaced in the direction of the pivot axis (5).

6. The wheel assembly according to claim 5,
**characterized in that** the pivot coupling region (42) comprises a pivoting/sliding shaft (44), which is elongated in the direction of the pivot axis (5), on the main wheel carrier (24) and at least one pivoting/sliding sleeve (50), which is guided on the pivoting/sliding shaft (44) so as to be pivotable about the pivot axis (S) and displaceable in the direction of the pivot axis (5), on the auxiliary wheel carrier (34).

7. The wheel assembly according to claim 6,
**characterized in that** the pivoting/sliding shaft (44) is supported on the main wheel carrier (24) in each of its axial end regions by means of a shaft carrier element (46, 48).

8. The wheel assembly according to any one of claims 1-7,
**characterized in that** the pivot axis (S) is offset transversely to a vertical direction (R) with respect to the operating wheel axis of rotation (B).

9. The wheel assembly according to any one of claims 1-8,
**characterized in that** the auxiliary wheel carrier (34) is variable in length in order to change a distance between the pivot axis (S) and an auxiliary wheel axis of rotation (H) of the at least one auxiliary assembly wheel (20s) supported on the auxiliary wheel carrier (34).

10. The wheel assembly according to claim 9,
**characterized in that** the auxiliary wheel carrier (34) comprises a first auxiliary wheel carrier element (54), which is supported on the main wheel carrier (24) such that it can pivot about the pivot axis (S) and be displaced in the direction of the pivot axis (5), and a second auxiliary wheel carrier element (54), which can be displaced on the first auxiliary wheel carrier element (54) essentially in the direction of an auxiliary wheel carrier longitudinal axis (T) with respect to the first auxiliary wheel carrier element (54).

11. The wheel assembly according to claim 10,
**characterized in that** the second auxiliary wheel carrier element (56) can be locked in an operating displacement position with respect to the first auxiliary wheel carrier element (54), and/or that the second auxiliary wheel carrier element (56) can be displaced with respect to the first auxiliary wheel carrier element (54) by means of an actuator (58).

12. The wheel assembly according to any one of claims 1-11,
**characterized in that** a first pair of wheels (30) is supported on the main wheel carrier (24) by means of a first wheel pair carrier (26), **in that** a second pair of wheels (32) is supported on the main wheel carrier (24) by means of a second wheel pair carrier (28), and **in that** a wheel (20₂) of the first pair of wheels (30) forms the first wheel and a wheel (20s) of the second pair of wheels (32) forms the second wheel.

13. A soil compactor comprising at least one wheel assembly (16) according to any one of the preceding claims.

14. The soil compactor according to claim 13,
**characterized in that** two wheel assemblies (16) are arranged one after the other in a longitudinal direction of the soil compactor (L) on a compactor frame (12), wherein the wheels (20) of a first wheel assembly of the two wheel assemblies (16) are offset with respect to the wheels (20) of a second wheel assembly of the two wheel assemblies (16) in a soil compactor transverse direction (Q) which is substantially orthogonal to the soil compactor longitudinal direction (L).

## Revendications

1. Un ensemble de roues pour un compacteur de sol, comprenant une pluralité de roues (20) supportée successivement sur un support de roue principal (24) dans le sens d'un axe de rotation de travail de la roue (B), dans lequel au moins une troisième roue, qui est disposée entre une première roue et une deuxième roue dans le sens de l'axe de rotation de travail de la roue (B), forme une roue d'assemblage auxiliaire (20₅) et est supportée sur le support de roue principal (24) au moyen d'un support de roue auxiliaire (34), dans lequel le support de roue auxiliaire (34) est fermement accouplé au support de roue principal (24) dans un état de fonctionnement de la roue auxiliaire et peut pivoter autour d'un axe de pivotement (S) et être déplacé dans la direction de l'axe de pivotement (S) par rapport au support de roue principal (24) dans un état d'assemblage de la roue auxiliaire.

2. L'ensemble de roues selon la revendication 1,
**caractérisé en ce que** l'axe de pivotement (S) est orienté sensiblement parallèlement à l'axe de rotation de travail de la roue (B).

3. L'ensemble de roues selon la revendication 1 ou 2,
**caractérisé en ce que** le support de roue auxiliaire (34) est fermement accouplé dans une zone d'accouplement fixe (36) au support de roue principale (24) dans l'état de fonctionnement de la roue auxiliaire au moyen d'une pluralité d'éléments d'accouplement (38), de préférence des boulons.

4. L'ensemble de roues selon la revendication 3,
**caractérisé en ce que** la zone d'accouplement fixe (36) comprend au moins une première plaque d'accouplement (40) sur le support de roue auxiliaire (34) et au moins une deuxième plaque d'accouplement (41), qui peut être fermement accouplée à ladite au moins une première plaque d'accouplement (40) par les éléments d'accouplement (38), sur le support de roue principale (24).

5. L'ensemble de roues selon l'une des revendications 1 à 4,
**caractérisé en ce que** le support de roue auxiliaire (34) est accouplé au support de roue principal (34) dans une zone d'accouplement pivotant (42) de sorte qu'il peut pivoter autour de l'axe de pivotement (S) et être déplacé dans la direction de l'axe de pivotement (S).

6. L'ensemble de roues selon la revendication 5,
**caractérisé en ce que** la zone d'accouplement pivotant (42) comprend un arbre pivotant/coulissant (44), qui est allongé dans la direction de l'axe de pivotement (5), sur le support de roue principal (24) et au moins un manchon pivotant/coulissant (50), qui est guidé sur l'arbre pivotant/coulissant (44) de manière à pouvoir pivoter autour de l'axe de pivotement (S) et être déplacé dans la direction de l'axe de pivotement (5), sur le support de roue auxiliaire (34).

7. L'ensemble de roues selon la revendication 6,
**caractérisé en ce que** l'arbre pivotant/coulissant (44) est supporté sur le support de roue principal (24) dans chacune de ses zones d'extrémité axiale au moyen d'un élément de support d'arbre (46, 48).

8. L'ensemble de roues selon l'une des revendications 1 à 7,
**caractérisé en ce que** l'axe de pivotement (S) est décalé transversalement par rapport à une direction verticale (R) par rapport à l'axe de rotation de travail de la roue (B).

9. L'ensemble de roues selon l'une des revendications 1 à 8,
**caractérisé en ce que** le support de roue auxiliaire (34) est de longueur variable afin de modifier une distance entre l'axe de pivotement (S) et un axe de rotation de roue auxiliaire (H) d'au moins une roue d'assemblage auxiliaire (20s) supportée sur le support de roue auxiliaire (34).

10. L'ensemble de roues selon la revendication 9,
**caractérisé en ce que** le support de roue auxiliaire (34) comprend un premier élément de support de roue auxiliaire (54), qui est supporté sur le support de roue principal (24) de manière à pouvoir pivoter autour de l'axe de pivotement (S) et être déplacé dans la direction de l'axe de pivotement (5), et un deuxième élément de support de roue auxiliaire (54), qui peut être déplacé sur le premier élément de support de roue auxiliaire (54) essentiellement dans la direction d'un axe longitudinal de support de roue auxiliaire (T) par rapport au premier élément de support de roue auxiliaire (54).

11. L'ensemble de roues selon la revendication 10,
**caractérisé en ce que** le deuxième élément de support de roue auxiliaire (56) peut être bloqué dans une position de déplacement de fonctionnement par rapport au premier élément de support de roue auxiliaire (54), et/ou que le deuxième élément de support de roue auxiliaire (56) peut être déplacé par rapport au premier élément de support de roue auxiliaire (54) au moyen d'un actionneur (58).

12. L'ensemble de roues selon l'une des revendications 1 à 11,
**caractérisé en ce qu**'une première paire de roues (30) est supportée sur le support de roue principal (24) au moyen d'un premier support de paire de roues (26), en ce qu'une deuxième paire de roues (32) est supportée sur le support de roue principal (24) au moyen d'un deuxième support de paire de roues (28), et en ce qu'une roue (20₂) de la première paire de roues (30) forme la première roue et qu'une roue (20s) de la deuxième paire de roues (32) forme la deuxième roue.

13. Un compacteur de sol comprenant au moins un ensemble de roues (16) selon l'une des revendications précédentes.

14. Le compacteur de sol selon la revendication 13,
**caractérisé en ce que** deux ensembles de roues (16) sont disposés l'un derrière l'autre dans une direction longitudinale du compacteur de sol (L) sur un châssis de compacteur (12), dans lequel les roues (20) d'un premier ensemble de roues des deux ensembles de roues (16) sont décalées par rapport aux roues (20) d'un deuxième ensemble de roues des deux ensembles de roues (16) dans une direction transversale du compacteur de sol (Q) qui est substantiellement orthogonale à la direction longitudinale du compacteur de sol (L).
